# EUROPÄISCHE PATENTSCHRIFT

(11) **EP 0 637 741 B1**
(45) Veröffentlichungstag und Bekanntmachung des Hinweises auf die Patenterteilung: **28.10.1998**
(21) Anmeldenummer: 94810448.4
(22) Anmeldetag: 29.07.1994
(51) Int. Cl.: G01N 1/42

(54) **Verfahren und Vorrichtung zur Vitrifizierung von Proben, insbesondere biologischen Proben**
Method and device for vitrifying samples, in particular biological samples
Procédé et dispositif pour vitrifier des échantillons, en particulier des échantillons biologiques

(30) Priorität: 03.08.1993 CH 2321/93
(43) Veröffentlichungstag der Anmeldung: 08.02.1995
(73) Patentinhaber: Wohlwend, Martin, CH-9466 Sennwald (CH)
(72) Erfinder: Wohlwend, Martin, CH-9466 Sennwald (CH)
(74) Vertreter: Riederer, Conrad A., Dr.

(56) Entgegenhaltungen:
- EP-A- 0 267 026
- WO-A-88/00964
- DE-C- 1 806 741
- R. A. STEINBRECHT ET AL. 'Cryotechniques in Biological Electron Microscopy' 1987 , KAPITEL 8, SPRINGER-VERLAG , BERLIN, S.175-191 * Absatz 5 *
- JOURNAL OF MICROSCOPY, Bd.163, Nr.1, Juli 1991 Seiten 3 - 18 M. MICHEL ET AL.

## Beschreibung

Um biologische Strukturen mit hoher Auflösung (1 - 3 nm) beschreiben zu können, verwendet man zur Abbildung dieser Strukturen das Transmissionselektronenmikroskop (TEM). Das im Transmissionselektronenmikroskop herrschende Hochvakuum (10⁻⁶ mbar) sowie die Möglichkeit, nur sehr dünne Schichten (0,1 µm) mit Elektronen durchstrahlen zu können, stellen hohe Ansprüche an die Präparationsmethoden für biologische Proben. Ueblicherweise werden die biologischen Proben im ersten Fixationsschritt in einer geeigneten Pufferlösung chemisch vernetzt, dann mit Lösungsmitteln entwässert, mit Kunststoff-Monomeren durchdrungen und schlussendlich polymerisiert. Diese festen Proben können dünngeschnitten und dann im Transmissionselektronenmikroskop untersucht werden. Es ist aber schon seit Jahrzehnten bekannt, dass vor allem die chemische Fixation Artefakte verursacht. So schrumpfen und blähen sich ganze Zellen und Zellkompartimente. Moleküle werden nicht in situ fixiert, sondern verschieben sich. Ebenso werden diffundible Ionen nicht immobilisiert.

Die einzige Alternative zur chemischen Fixation ist bis anhin die Gefrierfixation. Bei dieser Methode werden im ersten Fixationsschritt die biologischen Proben durch schnelle Abkühlung verfestigt. Gefriersubstition mit nachfolgender Einbettung, Gefrierätzung oder Gefrierschneiden sind die Methoden, mit denen die Proben einer Untersuchung mit dem Transmissionselektronenmikroskop zugänglich gemacht werden können. Durch Gefrieren gut immobilisierte Proben weisen eine optimale wirklichkeitsnahe Erhaltung der Ultrastruktur auf. Die Gefrierfixation ist daher der chemischen Fixierung überlegen (Studer et al, High Pressure Freezing comes of Age, Scanning Microscopy Supplement 3, 1989, p. 253-269).

Biologische Proben weisen einen Wassergehalt von ca. 30 bis 95 % auf. Bei der Immobilisierung durch Kälte können zwei unterschiedliche Ereignisse eintreten, je nachdem, ob die Abkühlung langsam oder schnell ist.

Ist die Abkühlung langsam, nämlich einige hundert Grad Celsius pro Sekunde, so entsteht Eis, d.h. in der biologischen Probe kommt es zu einer massiven Phasentrennung. Wachsende Eiskristalle, die nur aus Wassermolekülen bestehen, konzentrieren an ihren Rändern die im Zellsaft enthaltenen Stoffe, wie z.B. Zucker, Proteine, Nukleinsäuren, Fette, Ionen, usw. Derart durch Kälte immobilisierte Proben zeigen sogenannte Segregationsmuster, d.h. sehr feine im Nanometer-Bereich liegende bis sehr grobe im Mikrometer-Bereich liegende Netzmuster. Solchermassen gefrorene Proben stellen keine brauchbare Alternative zu chemisch fixierten Proben dar. Ist hingegen die Abkühlung schnell, d.h. grösser als eine Million Grad Celsius pro Sekunde, so kann die biologische Probe vitrifizieren, d.h. die Wassermoleküle finden keine Zeit, um Eiskristalle zu bilden, sondern sie erstarren und bilden einen festen amorphen Körper. Der vitrifizierte Zustand von Wasser ist unterhalb von -135° C stabil. Vitrifizierte Proben weisen daher die gewünschte wirklichkeitsnahe Strukturerhaltung auf (Michel et al. (1991), J. Microsc. 163:3-18).

Wie eben erwähnt, sind sehr hohe Abkühlraten für eine Vitrifikation notwendig. Solche Abkühlraten werden an der Oberfläche einer Probe von allen gebräuchlichen Einfriermethoden, die unter Atmosphärendruck ausgeführt werden, erreicht. Die Abkühlrate im Innern der Probe ist aber ausschliesslich von den physikalischen Eigenschaften des Objekts abhängig. Für reines Wasser ist z.B. die maximale AbKühlrate in der Mitte einer 100 µm dicken Schicht, die beidseitig optimal gekühlt wird, ca. 14'000 Grad Celsius pro Sekunde (zwischen 0° C und und -90° C). Dies heisst, dass nur sehr dünne Proben vitrifiziert werden können. Die in der Praxis erzielten Resultate zeigen, dass die Proben nur bis wenige Mikrometer von der Oberfläche entfernt ohne schädigende Eisbildung gefroren sind. Um dickere biologische Proben vitrifizieren zu können, müssen die Einfriereigenschaften der Proben verändert werden. Dies kann entweder durch Zugabe von Gefrierschutzmitteln oder durch die Anwendung von hohem hydrostatischen Druck erzielt werden.

Durch die Zugabe von Gefrierschutzmitteln kann mit kleinen Einfrierraten vitrifiziert werden. Biologische Proben müssen aber vor der Behandlung mit Gefrierschutzmitteln einer chemischen Vernetzung unterworfen werden. Aus diesem Grunde kann dabei keine bessere Strukturerhaltung der biologischen Proben erreicht werden als bei der chemischen Fixation. Die Verwendung von Gefrierschutzmitteln fällt daher ausser Betracht für eine verbesserte ultrastrukturelle Darstellung.

Wenn hoher hydrostatischer Druck (2'045 bar) verwendet wird, wird der Schmelzpunkt von Wasser, der bei Atmosphärendruck 0° C beträgt, auf -22° C erniedrigt, und es wird eine Unterkühlbarkeit, die bei Atmosphärendruck -39° C beträgt, auf -92° C erreicht (Kanno et al. (1975), Supercooling of water to -92° C under pressure. Science 189:880-881). Es wurde aufgrund theoretischer Ueberlegung angenommen, dass biologische Proben bei einem Druck von 2'045 bar und einer Abkühlrate von einigen 100° C/s vitrifizieren würden (Moor H. (1987), Theory and practice of high pressure freezing. In: Steinbrecht R.A., Zierold K. (eds) Cryotechniques in Biological Electron Microscopy, Berlin, Springer, 175-191).

Moor und seine Mitarbeiter entwickelten eine Hochdruckeinfriermaschine. Mit dieser Maschine wird flüssiger Stickstoff mit einem Druck von 2'100 bar und einer Temperatur von -150° C auf die biologische Probe geschossen. Die Proben wurden durch zwei scheibenförmige Goldplättchen (Durchmesser 3 mm, Dicke 0,6 mm), die eine Vertiefung von 0,5 mm bei einem Durchmesser von 2 mm aufwiesen, in einem Probenhalter getragen. Dies bewahrte die Proben vor Zerstörung während des Druckaufbaus und des Abkühlungsvorganges.

Hochdruckeinfriermaschinen werden in der DE-PS 1 806 741 und im Prospekt Balzers Hochdruck-Gefriermaschine HPM 100, BU 800 100 PD (8703) beschrieben. Eine auf dem Markt erhältliche Maschine garantiert einen Druckanstieg auf 2'000 bar in ca. 25 Millisekunden. Die Probe wird unmittelbar nach Erreichen der 2'000 bar mit einer Abkühlrate von 5'000° C/s abgekühlt (Moor 1987). Die Koordination des Druckanstieges und der Abkühlung der Probe werden dadurch erreicht, dass die Probenkammer vor dem Einfriervorgang mit Alkohol gefüllt wird. Beim Einleiten des flüssigen Stickstoffs steigt daher der Druck relativ rasch an, wobei der Alkohol und dann der Stickstoff durch eine Oeffnung in der Probenkammer austritt. Die praktischen Resultate haben ergeben, dass es biologische Proben gibt, die unter diesen Bedingungen bis zu einer Dicke von 150 µm vitrifiziert werden können. Es handelte sich dabei um junge Apfelblätter (Michel et al (1991), J. Microsc. 163: 3-18). Man kann daraus ableiten, dass die Einfriereigenschaften des Apfelblattes relativ gut sind, d.h. Einfrierraten von einigen 1'000° C/s sind unter 2'045 bar Druck ausreichend, um Vitrifikation zu erreichen. Andere biologische Proben, insbesondere tierische Gewebe, konnten nicht ebenso gut durch Kälte immobilisiert werden. Bei Knorpelgewebe, das zu 80 % aus Wasser besteht, sind bei 200 µm dicken Proben unter den gegebenen Umständen beidseitig etwa 20 µm dicke Schichten oberflächlich vitrifiziert worden. Daraus ist abzuleiten, dass die physikalischen Eigenschaften der biologischen Proben die Grenze der Vitrifizierbarkeit definieren. Es besteht daher das Bedürfnis, möglichst ideale Abkühlverhältnisse zu erreichen.

Die von handelsüblichen Hochdruckeinfriermaschinen erreichten Werte (Druckaufbau ca. 25ms, Einfrierrate 5000° C/s zwischen 0° C und -50° C) sind nicht optimal und können nicht durch einfache Eingriffe verbessert werden. Wird z.B. die Druckperiode durch Vergrössern des Auslasses an der Probenkammer verringert, so ist die Durchsatzrate an flüssigem Stickstoff grösser, und es stellt sich eine erhöhte Abkühlrate ein. Durch einen solchen Eingriff ist aber die Koordination von Druckaufbau und Temperaturabfall derart gestört, dass die biologische Probe vor Erreichung der 2'000 bar Druck abgekühlt wird. Infolgedessen wird die Probe unter Eiskristallbildung eingefroren und nicht vitrifiziert, obwohl die Abkühlrate hoch ist.

Es ist daher Aufgabe der vorliegenden Erfindung, ein Verfahren und eine Vorrichtung zu schaffen, die sicherstellen, dass der Druckanstieg und der Temperaturabfall immer richtig koordiniert sind, und dass die Abkühlrate möglichst gross ist.

Ein Verfahren zur Vitrifizierung von Proben, insbesondere biologischen Proben, bei welchem die Probe in eine Probenkammer eingesetzt, die Probenkammer mit einem Fluidum gefüllt wird, ohne die Probe auf Gefriertemperatur abzukühlen, und dann, um die Probe zu vitrifizieren, mit einem kryogenen Fluidum beschickt wird, welches unter hohem Druck steht und das erstgenannte Fluidum durch eine Oeffnung der Probenkammer ausstösst, ist erfindungsgemäss dadurch gekennzeichnet, dass die Fluidumauslassöffnung durch eine Absperrvorrichtung verschlossen gehalten wird, bis in der Probenkammer der Druck einen vorbestimmten Wert erreicht hat. Auf diese Weise wird ein schneller Druckanstieg auf 2100 bar in 20ms erreicht, welcher eine Minimalisierung allfälliger druckinduzierter Schäden an den biologischen Proben zur Folge hat. Das Verfahren garantiert auch eine hohe Abkühlrate von 20'000° C/s und mehr. Optimales Abkühlen der Probe heisst, dass die Einfriereigenschaften der Proben selbst die Dicke der vitrifizierten Schicht definieren. Die hohe Abkühlrate entsteht dadurch, dass die Oeffnung der Probenkammer relativ gross dimensioniert werden kann, so dass durch eine hohe Durchsatzrate die Probe äusserst rasch abgekühlt wird. So war es beispielsweise möglich, 150 µm dicke Knorpelscheiben vollständig zu vitrifizieren, während früher eine Vitrifizierung nur bis zu einer Tiefe von 20 µm gelang.

Als Fluidum zum Füllen der Probenkammer kann in herkömmlicher Weise ein solches genommen werden, dessen Temperatur über dem Gefrierpunkt liegt. Es ist aber auch möglich, ein Fluidum zu benützen, dessen Temperatur unter dem Gefrierpunkt der Probe liegt, wenn die Füllung rasch erfolgt und unmittelbar darauf die Beschickung mit kryogenem Fluidum vorgenommen wird, so dass vor Erreichen des Drucks mit dem vorbestimmten Wert die Probe nicht unter den Gefrierpunkt abgekühlt wird. Dies macht es auch möglich, zum Füllen der Probenkammer ebenfalls kryogenes Fluidum zu verwenden. Es wird sogar möglich, zum Füllen und zum Vitrifizieren kryogenes Fluidum von der gleichen Quelle zu benutzen, wobei es aber vorteilhaft sein kann, das zur Füllung benutzte kryogene Fluidum zu erwärmen oder zu kühlen, damit sichergestellt wird, dass die Probe während der Füllung und des Druckaufbaus weder nachteilig gekühlt oder erwärmt wird. Zur Verwendung als kryogenes Fluidum eignet sich vorteilhaft flüssiger Stickstoff unter einem Druck von mehr als 2100 bar.

Wird zur Füllung der Probenkammer eine Flüssigkeit verwendet, deren Temperatur über dem Gefrierpunkt der Probe liegt, so ist es vorteilhaft, dass diese erst bei relativ tiefer Temperatur gefriert. Als solche Flüssigkeit eignet sich beispielsweise Isopropanol, dessen Gefrierpunkt bei -88,5° C liegt.

Die Erfindung betrifft auch eine Vorrichtung zur Durchführung des Verfahrens. Diese Vorrichtung besitzt eine eine Fluidumauslassöffnung aufweisende Probenkammer, Mittel zum Halten der Probe, Mittel zur Zufuhr von kryogenem Fluidum und ist dadurch gekennzeichnet, dass an der Fluidumauslassöffnung eine Absperrvorrichtung vorgesehen ist, welche den Austritt von Fluidum aus der Probenkammer verhindert, bis der Druck in der Probenkammer einen vorbestimmten Wert erreicht hat. Als Absperrvorrichtung wird vorteilhaft ein mit einer Feder vorspannbares Ventil verwendet. Dies ermöglicht eine einfache Konstruktion. Die Vorspannung der Feder ist vorteilhaft z.B. durch eine Schraube verstellbar. Dies ermöglicht es, den Druck, bei welchem das Ventil öffnet, zu regulieren.

Vorteilhaft ist ein Ventil vor dem Einlass in die Probenkammer vorgesehen, das erst bei einem möglichst hohen voreingestellten Druck öffnet, damit der Druckaufbau des erstgenannten Fluidums möglichst rasch in der Probenkammer erfolgen kann. Ein Ventil, möglichst nahe der Probenkammer, kann sicherstellen, dass nach dem Erreichen des genannten Drucks oder eines anderen vorbestimmten Drucks die Zufuhr des erstgenannten Fluidums abgeschaltet wird, um das kryogene Fluidum der Probenkammer direkt zuzuführen. Die Absperrvorrichtung und die Mittel, welche die Zufuhr des erstgenannten Fluidums abschalten und das kryogene Fluidum der Probenkammer zuführen, sind zweckmässigerweise miteinander gekoppelt, so dass nach dem Oeffnen der Absperrvorrichtung zwangsläufig kryogenes Fluidum der Probenkammer zugeführt wird. Wie bereits früher erwähnt wurde, kann unter gewissen Bedingungen als Fluidum zur Füllung der Probenkammer ebenfalls kryogenes Fluidum verwendet werden. Zu diesem Zweck kann z.B. ein Bypass vorgesehen werden, der vom vorgenannten Ventil zur Probenkammer führt. Dies hat den Vorteil, dass auf die Verwendung von Isopropanol verzichtet werden kann und die Umwelt nicht mit diesem Stoff belastet wird. Zweckmässigerweise wird im Bypass eine Vorrichtung zum Heizen und/oder Kühlen vorgesehen, um sicherzustellen, dass die Probe bei der Füllung der Probenkammer nicht unzulässig abgekühlt oder erwärmt wird.

Zweckmässigerweise ist an der Fluidumauslassöffnung eine auswechselbare Düse angeordnet. Dies ermöglicht es, je nach Bedarf, Düsen mit kleinerem oder grösserem Durchmesser anzuordnen. Durch die Wahl der Düsenöffnung und der Ventileinstellung kann die gewünschte Abkühlrate eingestellt werden.

Ausführungsbeispiele der Erfindung werden nun unter Bezugnahme auf die schematische Zeichnung beschrieben. Es zeigt:
- Fig. 1: in schematischer Darstellung einen Schnitt durch ein erstes Ausführungsbeispiel der Vorrichtung,
- Fig. 2: die Düse und den Ventilkörper in vergrössertem Massstab,
- Fig. 3: den Verlauf der Druck- und der Temperaturkurve,
- Fig. 4: in schematischer Darstellung einen Schnitt durch ein zweites Ausführungsbeispiel der Vorrichtung, und
- Fig. 5: in schematischer Darstellung einen Schnitt durch ein drittes Ausführungsbeispiel der Vorrichtung.

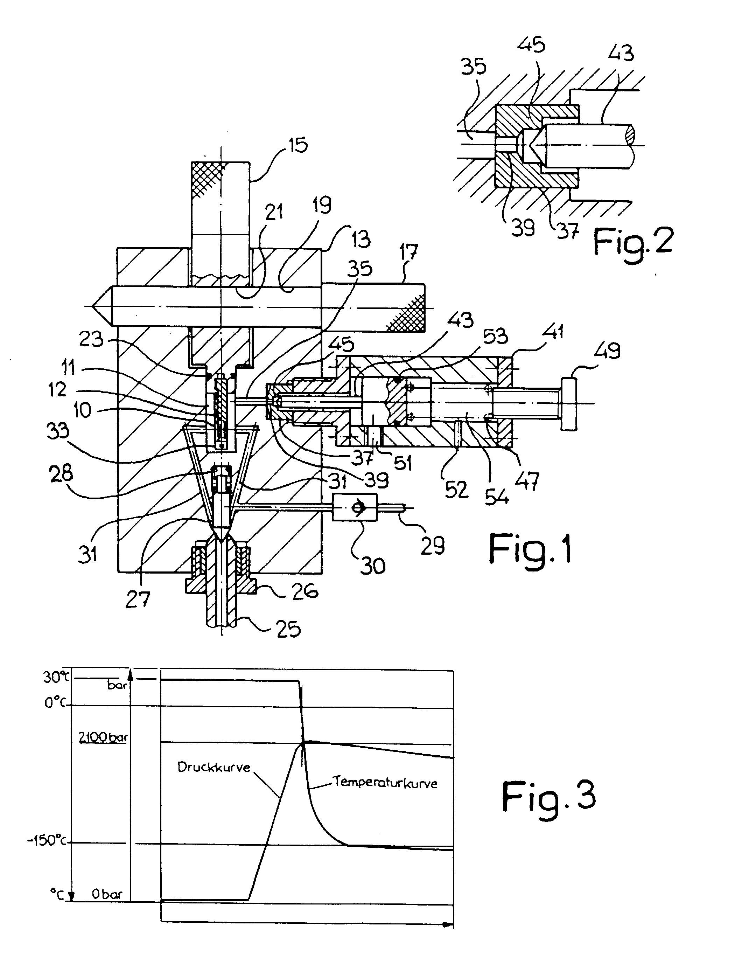

Wie Figur 1 zeigt, befindet sich die Probenkammer 11 in einem Block 13, der mit einem Deckel 15 verschlossen ist. Zur Sicherung des Deckels 15 dient ein Bolzen 17, der durch die Bohrung 19 im Block 13 und die Bohrung 21 im Deckel 15 eingeführt ist. Ein O-Ring 23 dient der Abdichtung. Unten am Block 13 ist die Hochdruckleitung 25 für kryogenes Fluidum mit der Schraube 26 festgeschraubt. Das kryogene Fluidum, z.B. flüssiger Stickstoff, steht unter einem Druck von mindestens 2'100 bar, vorzugsweise 2'500 bar. Ein Rückschlagventil 27 mit Feder 28 verhindert einen Rückfluss von Fluidum.

Ueber die Leitung 29 und das Rückschlagventil 30 kann der Probenkammer 11 vorgängig der Beaufschlagung mit flüssigem Stickstoff ein Fluidum, dessen Temperatur über dem Gefrierpunkt der Probe 10 liegt, zugeführt werden. Das Rückschlagventil 30 verhindert einen Rückfluss von Fluidum. Die Kanäle 31 dienen sowohl der Zufuhr dieses Fluidums als auch später der Zufuhr des kryogenen Fluidums.

Die Probe 10 wird zwischen zwei scheibenförmigen Plättchen 12, die eine Vertiefung aufweisen, durch einen Probenhalter 33 in der Probenkammer 11 gehaltert. Der nicht von der Probe ausgefüllte Raum in den Vertiefungen sollte dabei durch eine Flüssigkeit, z.B. 1-hexadecen, gefüllt sein, denn durch eingeschlossene Luft würde die Wirkung des Hochdrucks beeinträchtigt und die Abkühlrate vermindert. Die Fluidumauslassöffnung 35 wird durch einen Kanal im Block 13 gebildet, welcher bei einer auswechselbaren Düse 37 mündet. Die Düse 37 kann durch eine Düse mit kleinerer oder grösserer Düsenöffnung 39 ersetzt werden. Wird der Durchmesser des Ventilsitzes 45 immer gleich gehalten, so öffnet das Absperrventil immer beim gleichen Druck.

Die an der Fluidumauslassöffnung 35 angeordnete Absperrvorrichtung 41 wird durch ein Ventil gebildet, dessen Ventilkörper 43 mit dem Ventilsitz 45 zusammenarbeitet, welcher an der Düse 37 ausgebildet ist. Der Erzeugung der Schliesskraft des Ventils dient die Feder 47, wobei der Federdruck durch eine Stellschraube 49 einstellbar ist. Ein O-Ring 53 dient der Abdichtung des Federraums 54 der Feder 47. Das Ventil 41 hat einen Auspuff 51. Der Federraum 54 wird durch die Bohrung 52 entlüftet.

Um eine Probe zu vitrifizieren, wird der Bolzen 17 herausgezogen und der Deckel 15 aus dem Block 13 gehoben, wobei dann die Probe 10 in den Probenhalter 33 eingesetzt und der Probenhalter am Deckel 15 befestigt werden kann. Nach dem Einsetzen und Sichern des Deckels 15 wird dann über die Leitung 29 und das Rückschlagventil 30 die Probenkammer 11 mit einem Fluidum, z.B. Isopropylalkohol, dessen Temperatur über dem Gefrierpunkt der Probe liegt, gefüllt. Nachher wird kryogenes Fluidum, z.B. flüssiger Stickstoff, unter einem Druck von mindestens 2'100 bar, vorzugsweise 2'500 bar, eingelassen. Da die Probenkammer abgeschlossen ist, erfolgt ein schneller Druckanstieg, worauf, sobald der Oeffnungsdruck des Ventils 41 erreicht worden ist, ein rascher Abfluss des in der Probenkammer enthaltenen Fluidums und dementsprechend ein rascher Zufluss von frischem kryogenem Fluidum erfolgt. Dadurch wird eine maximale Abkühlrate erreicht, wie dies durch das Diagramm von Fig. 3 veranschaulicht wird. Es ist möglich, den Düsendurchmesser 39 so gross zu wählen, wie der gewünschte Druck während der für die Vitrifizierung der Probe benötigten Zeit gerade noch aufrechterhalten werden kann. Wenn das Ventil 41 öffnet, wird der Ventilkörper 43 nach hinten bewegt und das Fluidum kann durch den Auspuff 51 entweichen.

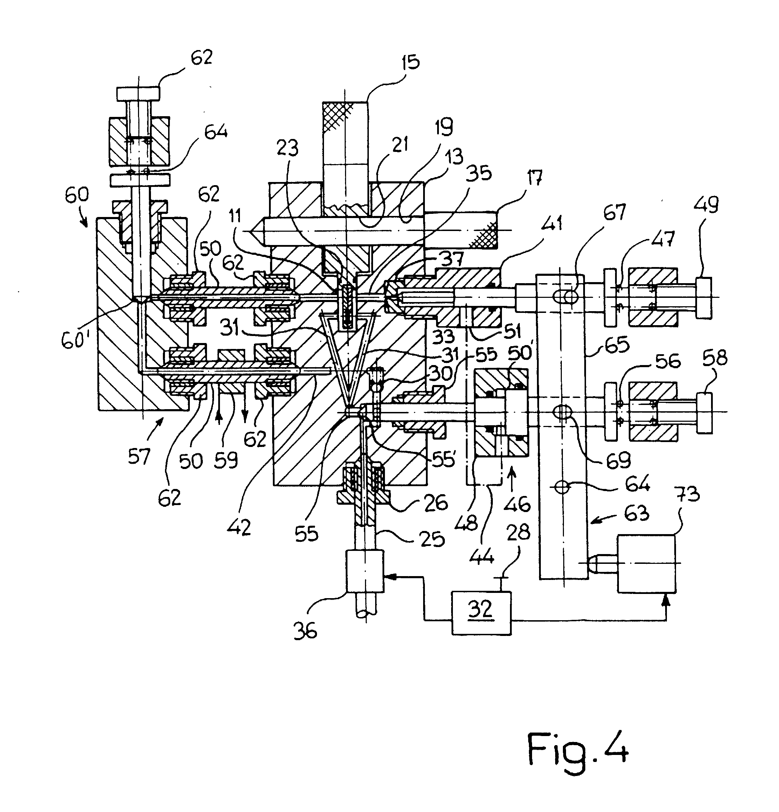

Während beim vorher beschriebenen Ausführungsbeispiel der Erfindung die Probenkammer mit einem Alkohol gefüllt wird, gestattet die Vorrichtung gemäss Figur 4 eine Vitrifikation ohne Alkohol.

Die Vorrichtung von Figur 4 hat grundsätzlich den gleichen Aufbau wie jene von Figur 1, so dass diesbezüglich auf die Beschreibung von Figur 1 verwiesen werden kann. Es werden daher auch für gleiche Teile die gleichen Bezugszeichen verwendet.

Da bei der Vorrichtung von Figur 4 dasselbe Fluidum zur Füllung der Probenkammer, zum Druckaufbau und zur Vitrifikation verwendet werden kann, wird die Leitung 29 von Figur 1 überflüssig. Es ist aber ein Ventil 55 vorgesehen, mit welchem das Fluidum entweder über einen Bypass 57 oder direkt über die Kanäle 31 zur Probenkammer 11 geleitet wird. Jeder dieser Fluidumströme hat jedoch beim Eintritt in die Probenkammer eine andere Temperatur, so dass in dieser Beschreibung weiterhin von zwei verschiedenen Fluiden die Rede ist. Das Ventil 55 wird durch die Feder 56 in der eingezeichneten Stellung gehalten, in welcher das Fluidum durch den Bypass 57 fliessen kann. Eine Stellschraube 58 dient der Einstellung der Vorspannung der Feder 56. Die Einstellung kann so sein, dass die Ventilnadel 55' schon vor dem Oeffnen der Absperrvorrichtung 41 entgegen der Kraft der Feder 56 verschoben wird, so dass der Bypass abgeschaltet wird und kryogenes Fluidum durch die Kanäle 31 zur Probenkammer fliesst. Wegen der nun zusätzlich mit Druck beaufschlagten Fläche auf der Stirnseite der Ventilnadel 55' bleibt dann die Ventilnadel in der umgeschalteten Stellung.

Der Bypass 57 besteht im wesentlichen aus der Leitung 42 und zwei mit Schraubanschlüssen 62 am Block 13 und dem Ventil 60 befestigten Rohrstücken 50.

Der Bypass 57 hat die Aufgabe, das kryogene Fluidum so zu thermostatisieren, d.h. auf eine Temperatur zu bringen, bei welcher es während der kurzen Zeit, welche notwendig ist, um die Probenkammer 11 zu füllen, nicht mehr in der Lage ist, die Probe im Probenhalter 33 auf Gefriertemperatur abzukühlen. Dies kann auf verschiedene Weise erreicht werden, z.B. durch eine Kühl-/ Heizvorrichtung 59. Die Probe darf auch nicht durch Kompressionswärme aufgeheizt werden. Gegebenenfalls muss also eine Kühlung durch die Heiz-/Kühlvorrichtung 59 erfolgen. Um einen Rückfluss zu verhindern, kann im Bypass 57 ein Rückschlagventil 30 vorgesehen sein. Das weitere im Bypass 57 angeordnete Ventil 60 ist ein Ueberdruckventil, welches erst öffnet, wenn ein gewisser Druck, z.B. 1300 bis 2500 bar, erreicht wird und dann geöffnet bleibt, um Fluidum zu Füllung der Probenkammer 11 durchzulassen. Das Ventil 60 bleibt offen, weil nun eine grössere Fläche auf der Stirnseite der Ventilnadel 60' mit Druck beaufschlagt wird. Das Ueberdruckventil 60 besitzt eine Stellschraube 62, mit welcher die Vorspannung der Feder 64 eingestellt werden kann. Da das Ventil 60 vorteilhaft erst bei einem Druck von 2100 bar öffnet, erfolgt der Druckanstieg in der Probenkammer 11 innert weniger Millisekunden.

Es ist wiederum eine Absperrvorrichtung 41 z.B. in Form eines Ueberdruckventils vorgesehen, mit welchem die Fluidumauslassöffnung 35 verschlossen gehalten wird, bis in der Probenkammer 11 der Druck einen vorbestimmten Wert erreicht hat.

Weiter sind Mittel vorgesehen, welche dafür sorgen, dass spätestens beim Oeffnen der Absperrvorrichtung 41 sofort das Ventil 55 umgeschaltet wird, um die Zufuhr von thermostatisierten Fluidum über den Bypass 57 abzuschalten und der Probenkammer 11 kryogenes Fluidum direkt über die kurzen Kanäle 31 zuzuführen. Diese Mittel können beispielsweise durch eine Kupplungseinrichtung 63 gebildet werden. Wie später dargelegt wird, hat die Kupplungseinrichtung 63 auch die Aufgabe, nach dem Vitrifizierungsvorgang den Druckabbau in der Vorrichtung zur gewährleisten.

Die Kupplungseinrichtung besteht aus einem um den Zapfen 64 drehbaren Hebel 65, dem an der Absperrvorrichtung 41 angeordnete Mitnehmer 67 und dem am Ventil 55 angeordneten Zapfen 69. Oeffnet somit die Absperrvorrichtung 41, so verschwenkt der Mitnehmer 67 den Hebel 65 im Uhrzeigersinn. Infolgedessen nimmt der Hebel 65 den Zapfen 69 des Ventils 55 mit und schaltet dieses um, so dass das Fluidum durch die Kanäle 31 in die Probenkammer 11 fliesst.

Es wäre aber auch möglich, das Ventil 55 z.B. pneumatisch durch den Auspuff 51 der Absperrvorrichtung 41 zu betätigen. Diese, die mechanische Kupplungseinrichtung 63 ersetzende Alternative, wird durch die strichpunktierte Linie 44 schematisch angezeigt, welche eine Leitung darstellt, die einen Teil des aus dem Auspuff 51 austretenden Fluids zu einem Betätigungszylinder 46 führt, der aus dem Zylindergehäuse 48 und dem Kolben 50' besteht.

Auch könnte das Ventil 55 ein Magnetventil sein, das durch ein beim Oeffnen der Absperrvorrichtung 41 erzeugtes Signal umgeschaltet wird.

Eine Steuervorrichtung 32 mit einer Betätigungstaste 28 ist vorgesehen, um das Ventil 36 zu öffnen und am Ende des Vitrifizierungsvorgangs das Solenoid 73 zu aktivieren, um den Hebel 65 der Kupplungsvorrichtung in der betätigten Stellung entgegen der Kraft der Feder 56 zu halten, bis der Druck in der Vorrichtung vollständig abgebaut ist.

Die in Figur 4 dargestellte Vorrichtung arbeitet wie folgt: Wird die Taste 28 der Steuervorrichtung 32 gedrückt, so betätigt diese das Ventil 36 und kryogenes Fluidum, z.B. flüssiger Stickstoff, mit einem Druck von etwa 2100 bar oder mehr, strömt über das Ventil 55 in den Bypass 57. Bei einem vorbestimmten Druck, z.B. 2100 bar, öffnet das Ventil 60. Durch die Heiz-/Kühlvorrichtung 59 thermostatisiertes Fluidum strömt somit in die Probenkammer 11 und füllt diese innert weniger Millisekunden. Es wird also bewusst auf die übliche Füllung der Probenkammer 11 mit einem Alkohol verzichtet. Es erfolgt auch sofort ein Druckaufbau, so dass die Absperrvorrichtung 41 öffnet. Die Füllung der Probenkammer 11 und der Druckaufbau gehen derart rasch vor sich, dass das entsprechend thermostatisierte Fluidum nicht in der Lage ist, die Probe zu gefrieren. Da die Absperrvorrichtung 41 mit dem Ventil 55 gekoppelt ist, wird sichergestellt, dass das Ventil 55 umschaltet und kryogenes Fluidum auf direktem Weg durch die Probenkammer 11 fliessen lässt. Die Umschaltung des Ventils 55 kann bei geeigneter Einstellung der Vorspannung der Feder 56 auch schon kurz vor Abschluss des Druckaufbaus erfolgen, indem der auf die Ventilnadel 55' wirkende Druck diese entgegen der Kraft der Feder 56 verschiebt.

Nach dem Umschalten des Ventils 55 fliesst kryogenes Fluidum unter hohem Druck durch die Probenkammer 11, so dass eine äusserst rasche Abkühlung der Probe unter hohem Druck erfolgt. Die gemessenen Abkühlraten von 0 bis -100° C im Zeitraum von 10 ms betragen 20'000° Cs und liegen somit um ein mehrfaches höher als dies mit den bisherigen Apparaturen erreicht werden konnte.

Nach dem Vitrifizierungsvorgang schliesst die Steuervorrichtung 32 das Ventil 36 und unterbricht die Zufuhr von kryogenem Fluidum in die Vorrichtung. Gleichzeitig steuert die Steuervorrichtung 32 das Solenoid 73, welches auf den Hebel 65 wirkt, um die Absperrvorrichtung 41 und das Ventil 55 in der betätigten Stellung zu halten, bis der Druck in der Vorrichtung vollständig abgebaut ist.

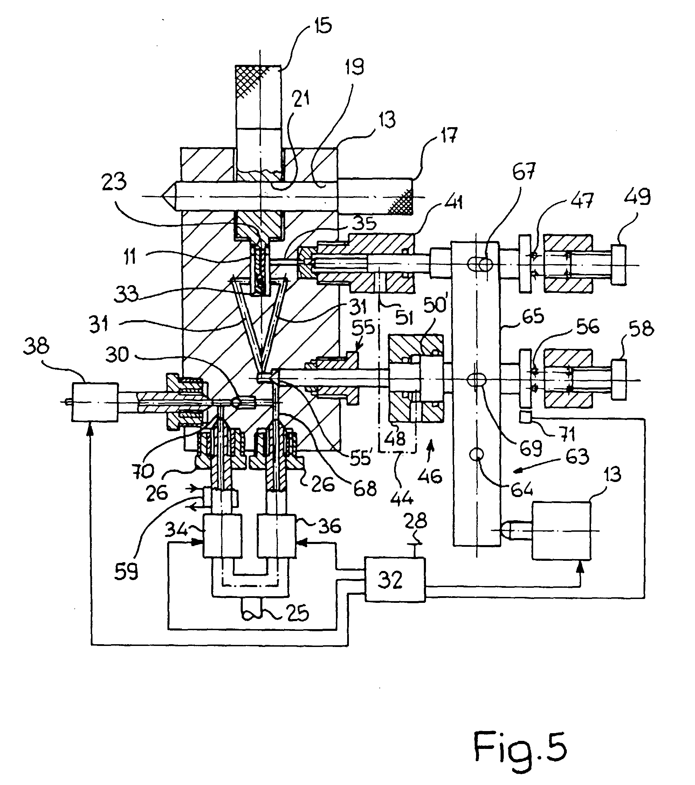

Die bevorzugte Ausführungsform der Erfindung gemäss Figur 5 stellt eine Vereinfachung der Vorrichtung von Figur 4 dar. Sie gestattet ebenfalls eine Vitrifikation ohne Alkohol. Wiederum werden für gleiche Teile die gleichen Bezugszeichen verwendet.

Bei der Vorrichtung von Figur 5 dient das Ventil 55 dazu, zuerst ein thermostatisiertes Fluidum zum Füllen und zum Druckaufbau und dann kryogenes Fluidum zum Vitrifizieren der Probe der Probenkammer 11 zuzuführen, wobei Ventil 55 erst umschaltet, wenn der Druck einen bestimmten voreingestellten Wert erreicht hat. Die Zufuhr der Fluida zur Probenkammer 11 erfolgt direkt über die Kanäle 31. Wie im Falle der Vorrichtung von Fig. 4 kann es sich beim Fluidum zum Füllen der Probenkammer 11 und Druckaufbau und beim Fluidum zum Vitrifizieren um das gleiche Fluidum handeln, wobei aber in der Regel die Temperaturen der beiden Fluidumströme den Erfordernissen entsprechend verschieden sind.

Im Gegensatz zur Vorrichtung von Fig. 4 führt bei der Vorrichtung von Fig. 5 die Hochdruckleitung 25 zusätzlich zum Ventil 34, welchem die Heiz-/Kühlvorrichtung 59 nachgeschaltet ist. Von dort führt die Bypassleitung 70 über das Rückschlagventil 30 zum Ventil 55. Beim Ventil 55 ist ein Sensor 71 vorgesehen, welcher das Umschalten des Ventils 55 der Steuervorrichtung 32 meldet, damit diese das Ventil 34 schliessen und das Ventil 36 öffnen kann.

Die in Figur 5 dargestellte Vorrichtung arbeitet wie folgt: Wird die Taste 28 der Steuervorrichtung 32 gedrückt, so betätigt diese das Ventil 34, und es fliesst Fluidum in die Bypassleitung 70, wobei es durch die Heiz-/Kühlvorrichtung 59 thermostatisiert wird, dass die Probentemperatur während der Druckaufbauphase nicht verändert wird. Sobald der voreingestellte Druck von z.B. 1600 bar beim Ventil 55 erreicht ist, öffnet dieses und wird aufgrund der zusätzlich mit Druck beaufschlagten Fläche auf die Stirnseite der Ventilnadel 55' offengehalten. Das thermostatisierte Fluidum fliesst über die Kanäle 31 in die Probenkammer 11 und füllt diese. Da das einströmende Fluidum unter einem Druck grösser 2100 bar oder einem anderen vorbestimmten Druck steht, erfolgt die Füllung und der Druckaufbau in der Probenkammer 11 innert weniger Millisekunden. Gleichzeitig mit der Oeffnung des Ventils 55 schliesst das Ventil 34 und öffnen das Ventil 36 und leicht verzögert öffnet auch das Ventil 38, damit der Bypass 70 drucklos wird und kryogenes Fluidum direkt über die Kanäle 31 der Probenkammer 11 zugeführt wird. Ist der voreingestellte Druck in der mit thermostatisiertem Fluidum gefüllten Probenkammer 11 erreicht, öffnet die Absperrvorrichtung 41 und das thermostatisierte Fluidum wird über die Fluidumauslassöffnung 35 ausgestossen und kryogenes Fluidum strömt in die Probenkammer 11 nach und vitrifiziert die Probe. Nach der Vitrifizierung wird das Ventil 36 geschlossen und das Solenoid 73 betätigt, das die Absperrvorrichtung 41 und das Ventil 55 in der geöffneten Stellung hält, bis der Druck in der Vorrichtung wieder vollständig abgebaut ist. Anschliessend werden auch die Ventile 34 und 38 wieder geschlossen.

Es sind Aenderungen möglich, ohne von der Erfindung abzuweichen. So kann bei der Ausführungsform von Fig. 5 der Bypass 70 weggelassen werden, wenn das Volumen der Probenkammer 11 und des Fluidumauslasskanals 35 klein ist und der Druckaufbau innert weniger Millisekunden erfolgen kann.

Ferner könnte auch so verfahren werden, dass während des Druckaufbaus die Fluidumauslassöffnung statt vollständig verschlossen nur stark gedrosselt wird.

## Patentansprüche

1. Verfahren zur Vitrifizierung von Proben, insbesondere von biologischen Proben, bei welchem die Probe (10) in eine eine Fluidumauslassöffnung aufweisende Probenkammer (11) eingesetzt wird, die Probenkammer mit einem Fluidum gefüllt wird ohne die Probe auf Gefriertemperatur abzukühlen und dann, um die Probe zu vitrifizieren, mit einem kryogenen Fluidum beschickt wird, das unter hohem Druck steht, dadurch gekennzeichnet, dass die Fluidumauslassöffnung (35) durch eine Absperrvorrichtung (41) verschlossen gehalten wird, bis in der Probenkammer (11) der Druck einen vorbestimmten Wert erreicht hat.

2. Verfahren nach Anspruch 1, dadurch gekennzeichnet, dass das erstgenannte Fluidum, mit dem die Probenkammer (11) zuerst gefüllt wird, eine Temperatur aufweist, die über dem Gefrierpunkt der Probe liegt.

3. Verfahren nach Anspruch 2, dadurch gekennzeichnet, dass als erstgenanntes Fluidum ein Alkohol, z.B. Isopropanol, verwendet wird.

4. Verfahren nach Anspruch 1, dadurch gekennzeichnet, dass das erstgenannte Fluidum eine Temperatur aufweist, die unter dem Gefrierpunkt der Probe liegen kann, und dass die Beschickung der Probenkammer mit kryogenem Fluidum unmittelbar nach deren Füllung erfolgt, so dass vor Erreichen des Drucks mit dem vorbestimmten Wert die Probe nicht unter den Gefrierpunkt abgekühlt wird.

5. Verfahren nach Anspruch 4, dadurch gekennzeichnet, dass die Füllung der Probenkammer (11) mit dem erstgenannten Fluidum so lange erfolgt, bis der Druck den genannten vorbestimmten Wert oder einen anderen vorbestimmten Wert erreicht hat.

6. Verfahren nach Anspruch 4 oder 5, dadurch gekennzeichnet, dass die Temperatur des erstgenannten Fluidums so gewählt wird, dass beim Aufbau des Drucks in der Probenkammer (11) die Probe praktisch nicht erwärmt wird.

7. Verfahren nach einem der Ansprüche 1 bis 5, dadurch gekennzeichnet, dass kryogenes Fluidum erwärmt oder gekühlt wird, um als erstgenanntes Fluidum zur Füllung der Probenkammer (11) zu dienen.

8. Verfahren nach einem der Ansprüche 1 bis 6, dadurch gekennzeichnet, dass als kryogenes Fluidum flüssiger Stickstoff mit 2'100 bar Druck verwendet wird.

9. Vorrichtung zur Durchführung des Verfahrens nach einem der Ansprüche 1 bis 8, mit einer eine Fluidumauslassöffnung (35) aufweisenden Probenkammer (11), mit Mitteln (12, 33) zum Halten der Probe, und mit Mitteln (25, 36) zur Zufuhr des kryogenen Fluidums unter hohem Druck, dadurch gekennzeichnet, dass an der Fluidumauslassöffnung (35) eine Absperrvorrichtung (41) vorgesehen ist, welche den Austritt von Fluidum aus der Probenkammer (11) verhindert, bis der Druck in der Probenkammer (11) einen vorbestimmten Wert erreicht hat.

10. Vorrichtung nach Anspruch 9, dadurch gekennzeichnet, dass ein Ventil (55) oder Ventile (34, 55) vorgesehen sind, um das kryogene Fluidum der Probenkammer (11) zuzuführen, und gegebenenfalls die Zufuhr des erstgenannten Fluidums abzuschalten.

11. Vorrichtung nach Anspruch 9 oder 10, dadurch gekennzeichnet, dass das Ventil (55) für die Zufuhr von kryogenem Fluidum zur Probenkammer (11) bei einem vorbestimmten Druck, z.B. 2100 bar, öffnet.

12. Vorrichtung nach Anspruch 10 oder 11, dadurch gekennzeichnet, dass die Absperrvorrichtung (41) und das Ventil (55) mittels einer Kupplungsvorrichtung (63), z.B. eines Hebels, miteinander gekoppelt sind.

13. Vorrichtung nach einem der Ansprüche 10 bis 12, dadurch gekennzeichnet, dass die Mittel zur Zufuhr des erstgenannten Fluidums durch einen Bypass (57, 70) gebildet werden, in welchem kryogenes Fluidum zum erstgenannten Fluidum wird.

14. Vorrichtung nach Anspruch 13, dadurch gekennzeichnet, dass der Bypass (57) vom Ventil (55) zur Probenkammer (11) führt.

15. Vorrichtung nach Anspruch 13, dadurch gekennzeichnet, dass der Bypass (70) von einer Abzweigung der Hochdruckleitung (25) zum Ventil (55) führt.

16. Vorrichtung nach einem der Ansprüche 13 bis 15, dadurch gekennzeichnet, dass eine Heiz-/Kühlvorrichtung (59) im Bypass (57, 70) für das erstgenannte Fluidum vorgesehen ist.

17. Vorrichtung nach einem der Ansprüche 13 bis 16, dadurch gekennzeichnet, dass im Bypass (57, 70) ein Ventil (60) vorgesehen ist, das erst bei einem vorbestimmten Druck öffnet.

18. Vorrichtung nach einem der Ansprüche 9 bis 17, dadurch gekennzeichnet, dass die Absperrvorrichtung (41) ein mit einer Feder (47) vorspannbares Ventil ist, wobei die Vorspannung der Feder (47), z.B. durch eine Schraube (49) verstellbar ist.

19. Vorrichtung nach einem der Ansprüche 9 bis 18, dadurch gekennzeichnet, dass an der Fluidumauslassöffnung (35) eine auswechselbare Düse (37) angeordnet ist.

20. Vorrichtung nach einem der Ansprüche 10 bis 16, dadurch gekennzeichnet, dass eine Steuervorrichtung (32) vorgesehen ist, welche die Zufuhr des Fluidums oder der Fluida steuert und nach der Vitrifizierung den Druckabbau in der Vorrichtung steuert.

21. Vorrichtung nach Anspruch 20, dadurch gekennzeichnet, dass ein durch die Steuervorrichtung (32) betätigbares Steuerorgan (73) vorgesehen ist, um nach der Vitrifikation auf die Kupplungsvorrichtung (63) einzuwirken, bis der Druckabbau durch die Fluidumauslassöffnung (35) vollendet ist.

22. Vorrichtung nach Anspruch 20 oder 21, dadurch gekennzeichnet, dass ein durch die Steuervorrichtung (32) betätigbares Ventil (38) vorgesehen ist, um nach der Vitrifizierung einen Druckabbau im Bypass (70) zu ermöglichen.

23. Vorrichtung nach einem der Ansprüche 20 bis 22, dadurch gekennzeichnet, dass ein Sensor (71) vorgesehen ist, welcher der Steuervorrichtung das Oeffnen des Ventils (55) meldet.

## Claims

1. A method for vitrification of samples, in particular biological samples, comprising the steps of introducing the sample (10) into a sample chamber (11) having a fluid outlet; filling the sample chamber with a fluid without cooling the sample to freezing temperature; and further introducing into the chamber a highly pressurised cryogenic fluid for vitrification of the sample, characterised in that the fluid outlet (35) is kept closed by a closing element (41) until the pressure in the sample chamber (11) has reached a predetermined value.

2. The method of claim 1, characterised in that the first mentioned fluid, which is filled into the sample chamber (11) first, has a temperature above the freezing point of the sample.

3. The method of claim 2, characterised in that an alcohol, e.g. isopropanol, is used as the first mentioned fluid.

4. The method of claim 1, characterised in that the first mentioned fluid has a temperature which may be below the freezing point of the sample, and in that the step of introducing into the sample chamber the cryogenic fluid is carried out immediately after the step of filling, so that, before the pressure has reached said predetermined value, the sample will not be cooled below the freezing point of the sample.

5. The method of claim 4, characterised in that the step of filling the sample chamber (11) with the first mentioned fluid is carried out until the pressure has reached said predetermined value or a different predetermined value.

6. The method of claim 4 or 5, characterised in that the temperature of the first mentioned fluid is selected such that, as pressure rises in the sample chamber, the sample will practically not be heated.

7. The method of anyone of the claims 1 to 5, characterised in that a cryogenic fluid is heated or cooled, to serve as the first mentioned fluid for filling sample chamber.

8. The method of anyone of the claims 1 to 6, characterised in that liquid nitrogen at a pressure of 2'100 bar is used as the cryogenic fluid.

9. An apparatus for carrying out the method according to anyone of the claims 1 to 8, comprising a sample chamber (11) with a fluid outlet (35), holder means (12,33) to hold the sample, supply means (25,36) to supply said high pressurised cryogenic fluid, characterised by a closing element (41) on the outlet (35) to hinder the fluid from leaving the sample chamber (11) until the pressure in the sample chamber (11) has reached a predetermined value.

10. The apparatus of claim 9, characterised by a valve (55) or valves (34,55) to supply the cryogenic fluid to the sample chamber (11) and, eventually, to stop supply of the first mentioned fluid.

11. The apparatus of claim 9 or 10, characterised in that the valve (55) for controlling the supply of cryogenic fluid to the sample chamber opens when a predetermined value of the pressure, e.g. 2'100 bar, is reached.

12. The apparatus of claim 10 or 11, characterised in that the closing element (41) and the valve (55) are interlocked by a interlocking device (63), e.g. a lever.

13. The apparatus of anyone of claims 10 to 12, characterised in that the supply means for the first mentioned fluid is formed by a bypass (57,70), within which the cryogenic fluid becomes the first mentioned fluid.

14. The apparatus of claim 13, characterised in that the bypass (57) leads from the valve (55) to the sample chamber (11).

15. The apparatus of claim 13, characterised in that the bypass (70) forms a branch of the high pressure tube (25) leading to the valve (55).

16. The apparatus of anyone of the claims 13 to 15, characterised by a heating/cooling device (59) within the bypass (57,70) for the first mentioned fluid.

17. The apparatus of anyone of the claims 13 to 16, characterised by a valve (60) within the bypass (57,70), opening at a predetermined pressure.

18. The apparatus of anyone of the claims 9 to 17, characterised in that the closing element (41) is a spring-loaded valve with a spring (47), the spring tension of which is controllable, e.g. by a screw (49).

19. The apparatus of anyone of the claims 9 to 18, characterised in that an exchangeable nozzle (37) is placed on the outlet (35).

20. The apparatus of anyone of the claims 10 to 16, characterised by a control unit (32) controlling the supply of the fluid or the fluids and the reduction of the pressure within the apparatus.

21. The apparatus of claim 20, characterised by a control element (73) coupled to said control unit (32) influencing the interlocking device (63) after the vitrification until the reduction of pressure through the outlet (35) has come to its end.

22. The apparatus of claim 20 or 21, characterised by a valve (38) coupled to the control unit (32) to allow the reduction of pressure within the bypass (70).

23. The apparatus of anyone of the claims 20 to 22, characterised by a sensing means (71) signalling to the control unit the opening of the valve (55) stopping the first fluid.

## Revendications

1. Procédé pour la vitrification des échantillons, en particulier des échantillons biologiques, ce procédé comprenant les pas d'introduire l'échantillon (10) dans une chambre d'échantillon (11), qui a une sortie pour des fluides; le pas de remplir la chambre d'échantillon avec un fluid sans réfrigérer l'échantillon à une température gelant; et ensuite le pas d'introduire à la chambre un fluid cryogène sous haute pression pour la vitrification de l'échantillon, caractérisé en ce que la sortie pour le fluid (35) est tenue fermée par un élément de fermeture (41) jusqu'à ce que la pression dans la chambre d'échantillon (11) ait atteint une valeur prédéterminée.

2. Procédé selon revendication 1, caractérisé en ce que le premier fluid, avec lequel la chambre d'échantillon (11) est remplit d'abord, a une température plus haute que le point de congélation de l'échantillon.

3. Procédé selon revendication 2, caractérisé en ce qu'un alcool, par exemple isopropanol, est utilisé comme le premier fluid.

4. Procédé selon revendication 1, caractérisé en ce que le premier fluid a une température, qui peut être même sous le point de congélation de l'échantillon, et en ce que le pas d'introduire le fluid cryogène dans la chambre d'échantillon est exécuté immédiatement après le pas de remplir, ainsi que l'échantillon n'est pas réfrigéré sous son point de congélation, avant que la pression ait atteint une valeur prédéterminée.

5. Procédé selon revendication 4, caractérisé en ce que le pas de remplir la chambre d'échantillon (11) avec le premier fluid est exécuté jusqu'à ce que la pression ait atteint la même valeur prédéterminée ou une valeur différente prédéterminée.

6. Procédé selon revendication 4 ou 5, caractérisé en ce que la température du premier fluid est sélectionnée ainsi que l'échantillon ne se réchauffe pas pendant que la pression dans la chambre d'échantillon augmente.

7. Procédé selon une quelconque des revendications 1 à 5, caractérisé en ce qu'un fluid cryogène est réchauffé ou réfrigéré pour servir comme le premier fluid dans le pas de remplir le chambre d'échantillon.

8. Procédé selon une quelconque des revendications 1 à 6, caractérisé en ce que nitrogène liquide à une pression de 2'100 bar est utilisé comme le fluid cryogène.

9. Dispositif pour exécuter le procédé selon une quelconque des revendications 1 à 8, avec une chambre d'échantillon (11) qui a une sortie (35) pour des fluides, avec des moyens (12,33) pour tenir l'échantillon, des moyens (25,36) pour approvisionner un fluid cryogène sous haute pression, caractérisé par un élément de fermeture (41) à la sortie (35) pour empêcher le fluid de sortir de la chambre d'échantillon (11) jusqu'à ce que la pression dans la chambre d'échantillon (11) ait atteint une valeur prédéterminée.

10. Dispositif selon revendication 9, caractérisé par une soupape (55) ou des soupapes (34,55) pour approvisionner le fluid cryogène à la chambre d'échantillon (11) et, le cas échéant, pour arrêter l'approvisionnement du premier fluid.

11. Dispositif selon revendication 9 ou 10, caractérisé en ce que la soupape (55) contrôlant l'approvisionnement du fluid cryogène à la chambre d'échantillon ouvre seulement si la pression a atteint une valeur prédéterminée, par exemple 2'100 bar.

12. Dispositif selon revendication 10 ou 11, caractérisé en ce que l'élément de fermeture (41) et la soupape (55) sont couplés par une pièce d'accouplement (63), par exemple un levier.

13. Dispositif selon une quelconque des revendications 10 à 12, caractérisé en ce que le moyen d'approvisionnement pour le premier fluid est formé par un by-pass (57,70), dans lequel le fluid cryogène devient le premier fluid.

14. Dispositif selon revendication 13, caractérisé en ce que le by-pass (57) conduit de près de la soupape (55) à la chambre d'échantillon (11).

15. Dispositif selon revendication 13, caractérisé en ce que le by-pass (70) forme une branche du conduit à haute pression (25), laquelle branche amène à la soupape (55).

16. Dispositif selon une quelconque des revendications 13 à 15, caractérisé par un dispositif réchauffant/réfrigérant (59) pour le premier fluid, qu'est prévu dans le by-pass (57,70).

17. Dispositif selon une quelconque des revendications 13 à 16, caractérisé par une soupape (60) dans le by-pass (57,70), qui s'ouvre à une pression prédéterminée.

18. Dispositif selon une quelconque des revendications 9 à 17, caractérisé en ce que l'élément de fermeture (41) est une soupape commandée par un ressort (47), la tension du ressort soient réglable, par exemple avec une vis (49).

19. Dispositif selon une quelconque des revendications 9 à 18, caractérisé en ce qu'un élément d'injection échangeable (37) est placé à la sortie (35).

20. Dispositif selon une quelconque des revendications 10 à 16, caractérisé par une unité de contrôle (32) contrôlant l'approvisionnement du fluid ou des fluides et aussi la réduction de la pression dans le dispositif.

21. Dispositif selon revendication 20, caractérisé par un élément de contrôle (73) couplé à l'unité de contrôle (32), qui influence le dispositif de couplage (63) après la vitrification jusqu'à ce que la réduction de la pression par la sortie (35) soit finit.

22. Dispositif selon revendication 20 or 21, caractérisé par une soupape (38) couplée à l'unité de contrôle (32) qui permet la réduction de la pression dans le by-pass (70).

23. Dispositif selon une quelconque des revendications 20 à 22, caractérisé par un moyen sensitif (71) signalant à l'unité de contrôle l'ouverture de la soupape (55) qui arrête le premier fluid.
